# EUROPEAN PATENT APPLICATION

(11) **EP 4 494 916 A1**
(43) Date of publication of application: **22.01.2025**
(21) Application number: 23787368.2
(22) Date of filing: 17.01.2023
(51) Int. Cl.: B60L 53/00, B60L 53/60

(54) **CHARGING METHOD, CHARGING STATION, SYSTEM, AND STORAGE MEDIUM**

(30) Priority: 12.04.2022 CN 202210376885
(71) Applicant: Beijing Jingdong Qianshi Technology Co., Ltd., Beijing 100176 (CN)
(72) Inventor: WANG, Zhen, Beijing 100176 (CN); LIU, Xu, Beijing 100176 (CN); ZHE, Wenming, Beijing 100176 (CN); ZHANG, Tao, Beijing 100176 (CN); HUANG, Min, Beijing 100176 (CN)
(74) Representative: Prüfer & Partner mbB Patentanwälte · Rechtsanwälte
(86) International application number: PCT/CN2023/072529
(87) International publication number: WO 2023/197720

(57) **Abstract**

A charging method, comprising : step 111, a charging device sending a charging request to a long-range radio (LoRa) base station on the basis of LoRa communication, the charging request comprising location information of the charging device; step 112, receiving a target charging location fed back by the LoRa base station and an identifier of a charging station, the LoRa base station selecting the target charging location according to the location information; step 113, the charging device proceeding to the target charging location and sending a wake-up message by means of a wireless signal, the wake-up message comprising an identifier; step 114, beginning charging, if the target charging station corresponding to the target charging location successfully matches the identifier. Also disclosed are a charging station, a charging system and a storage medium. The present method can improve the reliability of automatic charging docking.

## Description

### CROSS-REFERENCE TO RELATED APPLICATIONS

The present application is based on and claims priority to China Patent Application No. 202210376885.X filed on April 12, 2022, the disclosure of which is incorporated by reference herein in its entirety.

### TECHNICAL FIELD

The present disclosure relates to the field of mobile charging technology, in particular to a charging method, a charging station and system and a storage medium.

### BACKGROUND

In recent years, with the rapid development of robot-related technologies, the requirements for the charging technology become higher and higher . At present, there are several communication methods between the battery and the charger, such as CAN (Controller Area Network), RS485 and WiFi (Wireless Fidelity) . The connection between the battery and the charger is usually realized by using a connector or a WiFi wireless signal.

### SUMMARY

It is an object of the present disclosure to improve the reliability of automatic charging docking.

According to one aspect of some embodiments of the present disclosure, a charging method is provided. The method comprises the steps of: sending a charging request, by a charging device, to a LoRa base station based on LoRa communication, wherein the charging request comprises a location information of the charging device; receiving a target charging location and an identification of a charging station fed back by the LoRa base station, wherein the target charging location is selected by the LoRa base station according to the location information; heading for the target charging location and sending an awakening message via a wireless signal by the charging device, wherein the awakening message comprises the identification; and starting charging in a case where a target charging station corresponding to the target charging location successfully matches the identification.

In some embodiments, the charging method further comprises: in a case where the charging device receives a location adjustment information from the target charging station after the awakening message is sent, moving according to the location adjustment information until charging is started, wherein the location adjustment information is sent via the wireless signal.

In some embodiments, the wireless signal is a signal based on LoRa communication.

In some embodiments, the charging is started comprises: moving, by the charging device, according to the target charging location, until a first charging port of the charging device is attached to a second charging port of the target charging station; and obtaining electric energy, by the charging device, through the first charging port, wherein the charging device uses an attached charging method.

In some embodiments, the charging method further comprises at least one of: during a charging process, monitoring a charging state, and sending a first state monitoring information to the target charging station in a first predetermined frequency by the charging device, via the wireless signal; or receiving a second state monitoring information from the target charging station by the charging device, via a wireless signal.

In some embodiments, the charging method further comprises stopping charging when it is found that the charging state is abnormal, and then sending an abnormal charging state information to at least one of a base station or a charging station by the charging device.

According to one aspect of some embodiments of the present disclosure, a charging method is provided. The method comprises: receiving an awakening message from a charging device via a wireless signal by a charging station, wherein the awakening message comprises an identification of a target charging station; and matching the identification of the target charging station with an own identification of the charging station, and awakening a charging function to charge the charging device in a case of successfully matching, wherein a target charging location and the identification of the target charging station are obtained by the charging device from a LoRa base station which is based on LoRa communication.

In some embodiments, the charging method further comprises: awakening a device detection function in a case where the identification of the target charging station is successfully matched with the own identification of the charging station; performing charging the charging device after it is determined by the device detection function that the charging device reaches the target charging location; and sending a location adjustment information to the charging device when it is determined by the device detection function that the charging device has not reached the target charging location.

In some embodiments, the wireless signal is a signal based on LoRa communication .

In some embodiments, the charging the charging device comprises: charging a first charging port through a second charging port in a case where the second charging port of the charging station is attached to the first charging port of the charging device, wherein the charging device uses an attached charging method.

In some embodiments, the charging method further comprises at least one of: receiving a first state monitoring information from the charging device by the charging station via the wireless signal; or during a charging process, monitoring a charging state and sending a second state monitoring information to the charging device by the charging station via the wireless signal, according to a second predetermined frequency.

In some embodiments, the charging method further comprises at least one of: stopping charging the charging device and sending an abnormal charging state information to the LoRa base station by the charging station, in a case where the charging state is found abnormal, wherein the LoRa base station updates the stored information of charging stations according to the abnormal charging state information, to allocate the target charging station to the charging device according to the information of the charging stations; or sending a charging completion information to the LoRa base station by the charging station, in a case where the charging device departs from the target charging location, to update the target charging location to an idle state by the LoRa base station.

In some embodiments, the charging method further comprises: starting a first timing in a case where the charging of the charging device is determined completed; stopping the first timing and returning the first timing to zero in response to the awakening message is received; and sleeping the device detection function and the charging function in response to the first timing reaches a predetermined amount of sleep time.

In some embodiments, the charging method further comprises: starting a second timing in a case where it is determined by the device detection function that the charging device reaches the target charging location; stopping the second timing in a case where it is determined by the device detection function that the charging device departs from the target charging location; and determining an occupation time of the charging device at the target charging location according to a duration of the second timing.

According to one aspect of some embodiments of the present disclosure, a charging method is provided. The method comprises: receiving a charging request based on LoRa communication from a charging device by a LoRa base station, wherein the charging request comprises a location information of the charging device; selecting a target charging location according to the location information of the charging device, and determining an identification of a corresponding charging station; and sending the target charging location and the identification to the charging device for the charging device to head for the target charging location, and activating a target charging station to charge according to the identification.

In some embodiments, the sending the target charging location and the identification to the charging device comprises: determining a charging location closest to the charging device as the target charging location among the charging locations where is in an idle state and the corresponding charging station is normal, according to associated information of charging locations and the location information of the charging device, wherein the associated information of the charging locations comprises whether in the idle state, whether the corresponding charging station is normal, a location and the identification of the corresponding charging station.

In some embodiments, the charging method further comprises at least one of: updating the target charging location to a non-idle state by the LoRa base station, after the target charging location is determined; updating the target charging location to the idle state by the LoRa base station, after the charging completion information from the charging station is received; updating the target charging location to a charging station abnormal state by the LoRa base station, in a case where an abnormal charging state information from at least one of the charging station or the charging device is received; or updating the target charging location to a charging station normal state by the LoRa base station, in a case where a state restoration information from the charging station is received.

According to one aspect of some embodiments of the present disclosure, a charging station is provided. The charging station comprises: an information interaction unit configured to receive an awakening message from a charging device via a wireless signal, wherein the awakening message comprises an identification of a target charging station; and a controller configured to match an identification of the target charging station with an own identification of the charging station, and awaken a charging unit in a case of successfully matching; a charging unit configured to charge the charging device, wherein a target charging location and the identification of the target charging station are obtained by the charging device from a LoRa base station which is based on LoRa communication.

In some embodiments, the information interaction unit is a LoRa communication module, and the wireless signal is a signal based on LoRa communication.

In some embodiments, the charging station further comprises: a device detection unit, configured to detect whether the charging device reaches a target charging location after an awakening instruction from the controller is received, and feed back to the controller; the controller is further configured to send the awakening instruction to the device detection unit in a case where the identification of the target charging station is successfully matched with the own identification of the charging station; if the device detection unit feeds back that the charging device reaches a target charging location, the operation of awakening the charging unit is performed; and if not, a location adjustment information is sent through the information interaction unit.

In some embodiments, the device detection unit comprises an ultrasonic sensor.

In some embodiments, the charging station further comprises: a solid state circuit breaker configured to turn on the device detection unit in a case where the awakening instruction from the controller is received; and turn off the device detection unit in a case where a sleep instruction from the controller is received.

In some embodiments, the charging station further comprises, a timer configured to start a first timing according to a first timing instruction of the controller; stop timing and return the first timing to zero according to a timing stop instruction of the controller; and send the timing stop information to the controller to stop timing and return to zero in a case where the timing reaches a predetermined amount of sleep time; the controller is further configured to send the first timing instruction to the timer in a case where the charging of the charging device is determined completed; send the timing stop instruction to the timer in a case where the information interaction unit receives the awakening message; and send the sleep instruction in a case where the timing stop information is received.

According to one aspect of some embodiments of the present disclosure, a charging system is provided. The charging system comprises: a memory; and a processor coupled to the memory, wherein the processor is configured to perform any method above based on instructions stored in the memory.

According to one aspect of some embodiments of the present disclosure, a non-transitory computer-readable storage medium is provided. The storage medium has computer program instructions stored thereon that, when executed by a processor, implement the steps of any method above.

According to one aspect of some embodiments of the present disclosure, a charging system is provided. The charging system comprises: a charging station configured to perform any method performed by the charging station above; and a LoRa base station configured to perform any method performed by the LoRa base station above.

In some embodiments, the charging system further comprises: a charging device configured to perform any method performed by the charging device above.

### BRIEF DESCRIPTION OF THE DRAWINGS

The accompanying drawings described here are intended to provide a further understanding of the present disclosure and constitute a part of the present disclosure. The illustrative embodiments of the present disclosure as well as the descriptions thereof, which are intended for explaining the present disclosure, do not constitute improper definitions on the present disclosure. In the accompanying drawings:
Fig. 1 is a flowchart of some embodiments of the charging method according to the present disclosure.
Fig. 2 is a flowchart of other embodiments of the charging method according to the present disclosure.
Fig. 3 is a flowchart of still other embodiments of the charging method according to the present disclosure.
Fig. 4 is a schematic view of some embodiments of the charging station according to the present disclosure.
Fig. 5 is a schematic view of other embodiments of the charging station according to the present disclosure.
Fig. 6 is a schematic view of some embodiments of the charging system according to the present disclosure.
Fig. 7 is a schematic view of other embodiments of the charging system according to the present disclosure.
Fig. 8 is a schematic view of still other embodiments of the charging system according to the present disclosure.

### DETAILED DESCRIPTION

The technical solution of the present disclosure will be further described in detail below by way of the accompanying drawings and embodiments.

In the related art, with high accuracy of the communication connector and also high requirements for insertion accuracy, manual insertion operations are often required, and multiple insertions are likely to cause damage and reduce the service life of the device. However, when a wireless communication method is used, since the charging stations are often allocated in the environment with poor wireless signal penetration such as a basement, a parking lot or a safe isolation area, the wireless signal is weak with a poor reliability in actual use.

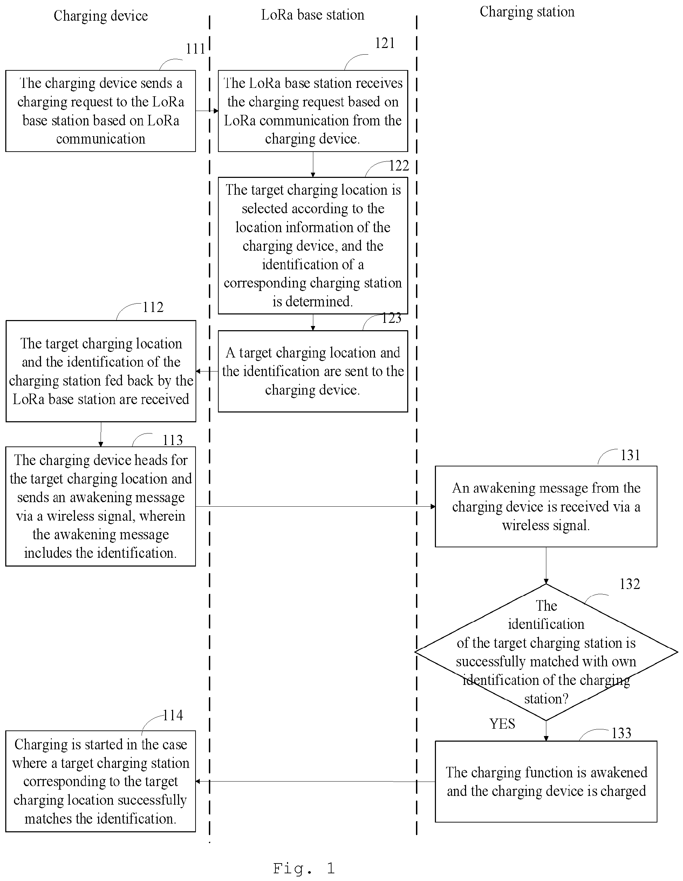

The flowchart of some embodiments of the charging method according to the present disclosure is shown in Fig. 1, which is divided by dotted lines, wherein the leftmost steps 111 to 114 are the operations performed by a charging device, the middle column of steps 121 to 123 are the operations performed by a LoRa base station, and the right steps 131 to 133 are the operations performed by a charging station.

In Step 111, the charging device sends a charging request to the LoRa base station which is based on LoRa communication, wherein the charging request includes the location information of the charging device. In some embodiments, the charging device may obtain real-time positioning information by using a deployed GPS device, or obtain real-time positioning information by way of the mobile communication technology, then send a charging request through the LoRa communication device deployed in the charging device, which is to be received by the LoRa base station covering the area. The LoRa base station performs the operations in Step 121 described hereinafter.

In some embodiments, the charging device may refer to a mobile device carrying a rechargeable battery, for example, an AGV or a robot required to be charged.

In Step 121, the LoRa base station receives the charging request based on LoRa communication from the charging device and extracts the location information of the charging device therefrom to perform Step 122.

In some embodiments, the LoRa base station may first verify the identity of the charging device according to the information of the charging device carried in the charging request, and extract the location information in the charging request if verified, so as to realize the verification of the access identity and improve the security of the system. If not verified, the charging request is ignored.

In Step 122, the LoRa base station selects the target charging location according to the location information of the charging device, and determines the identification of a corresponding charging station. In some embodiments, the LoRa base station may configure the target charging location to be a non-idle state to avoid allocating the charging location to other charging devices, so as to improve the reliability of allocating a charging location.

In some embodiments, the LoRa base station selects the target charging location among the charging locations available based on a predetermined strategy according to the association information of each charging location stored in advance and the location information in the charging request. In some embodiments, the predetermined strategy is to select a charging location available with the shortest distance through path planning; or is to screen a charging location available according to a charging preference of the charging device stored in advance, and further select a charging location with the shortest distance among the screening results. The charging preference of the user may include selecting a parking lot with a preset size, selecting a charging station with a preset specification or brand, and the like.

In some embodiments, the associated information of each charging location stored by the LoRa base station in advance may include whether the charging location is idle, whether a corresponding charging station is normal, the location (for example, latitude and longitude) and the identification of the charging station. A plurality of charging stations are concentratedly deployed in the areas with a close distance, which is convenient for cable deployment and post-maintenance, and the identifications of different charging stations in close areas are different from each other. In some embodiments, the associated information of the charging location may also include the size of a charging location, the specification or brand of a corresponding charging station, and the like.

In some embodiments, the charging station is in one-to-one correspondence with the charging location, so that each charging location has a charging port, and the identification of the charging station is the identification of the charging location. In some embodiments, a plurality of charging stations may belong to the same charging facility, and one or more charging facilities may be provided in the areas with a close distance. By way of the method in the embodiment of the present disclosure, it is possible to schedule a charging device in the case where the charging locations are concentrated, thereby improving the automation degree and reliability of the whole charging process, and also improving the utilization rate of the charging station.

In Step 123, the LoRa base station sends a target charging location and the identification of a corresponding charging station to the charging device, so as to trigger the charging device to perform Step 112. In some embodiments, the LoRa base station may also feed back the path planning information from a current location of the charging device to the target charging location, which is to be directly used by the charging device.

In Step 112, the charging device receives the target charging location and the identification of the charging station fed back by the LoRa base station, and then perform Step 113.

In Step 113, the charging device heads for the target charging location and sends an awakening message via a wireless signal. The awakening message includes the identification of the charging station corresponding to the target charging location, for the corresponding charging station to identify. The awakening message triggers the charging station to perform Step 131.

In some embodiments, if the received feedback information includes the path planning information, the charging device may directly travel according to the path planning information, thereby reducing the requirements for the path planning capability of the charging device.

In some embodiments, the charging device carry out path planning according to its own real-time location and the target charging location, and then travel according to a path planning result, thereby improving the path planning accuracy and the reaction flexibility.

In some embodiments, the charging device sends an awakening message according to a predetermined frequency during the process of heading for the target charging location, to awaken the charging station as soon as possible and shorten the waiting time of the charging device after reaching the target charging location. In some embodiments, the charging device calculates a distance from the target charging location, and when the distance is less than or equal to a predetermined distance threshold, start to send an awakening message in a predetermined frequency, thereby awakening the charging station as soon as possible, and lessening the sending times and reducing the energy consumption, and reducing the data processing burden of the charging station. In some embodiments, the charging device sends an awakening message after reaching the target charging location, thereby further reducing the energy consumption and reducing the data processing burden of the charging station.

In some embodiments, the charging device may send an awakening message based on its LoRa communication function, so as to improve the reliability of data transmission on the one hand, and reduce the number of wireless communication modules required to be deployed on the charging device on the other hand, thereby lessening the size requirements of the charging device and reducing the cost.

In Step 131, the charging station receives an awakening message from the charging device via a wireless signal. In some embodiments, the charging station uses the LoRa communication module to receive an awakening message sent based on LoRa communication technology.

In Step 132, the charging station parses the identification of the target charging station in the awakening message and matches the identification of the target charging station with its own identification. If successfully matched, Step 133 is performed. Otherwise , it is determined that the target charging station is not itself, and the awakening message is ignored.

In Step 133, if the charging station is currently in a sleep state, the charging function is awakened and gets ready for charging the charging device, and the charging device is triggered to perform Step 114.

In Step 114, the charging device is ready and charging is started. In some embodiments, the charging device may also report own parameters, so that the charging station sets corresponding charging parameters, such as voltage, current and battery charge level, and discharge according to the charging parameters.

In some embodiments, the charging device may use an attached charging method with higher charging power and efficiency compared with wireless charging, and plug-in connection is not required, which reduces the requirements for the location accuracy of the charging device and lowers the probability for necessity in manual adjustment, and improves the success rate and reliability of automatic processing of the whole charging process. In some embodiments, the charging device moves according to the target charging location until the first charging port on the charging device is attached to the second charging port of the target charging station, so that the charging device obtains electric energy through the first charging port.

Based on a method in the above embodiments, the charging device may initiate a charging request to the LoRa base station based on a LoRa communication method, and the base station performs allocation according to the charging location stored in advance, and informs the charging device by a LoRa communication method, so that the charging device may automatically head for the charging location. The communication process is only present between the LoRa base station and the charging device without data transmission depending on Internet or WiFi signal coverage, thereby reducing the probability of packet loss and bit error, and improving the reliability of charging location allocation. The charging device directly interacts with the charging station via a wireless signal without transfer of a third party, which further improves the reliability and efficiency of communication. The charging station starts to work when awakened by the charging device, and not need to maintain a working state all the time, thereby reducing the energy consumption of the charging station.

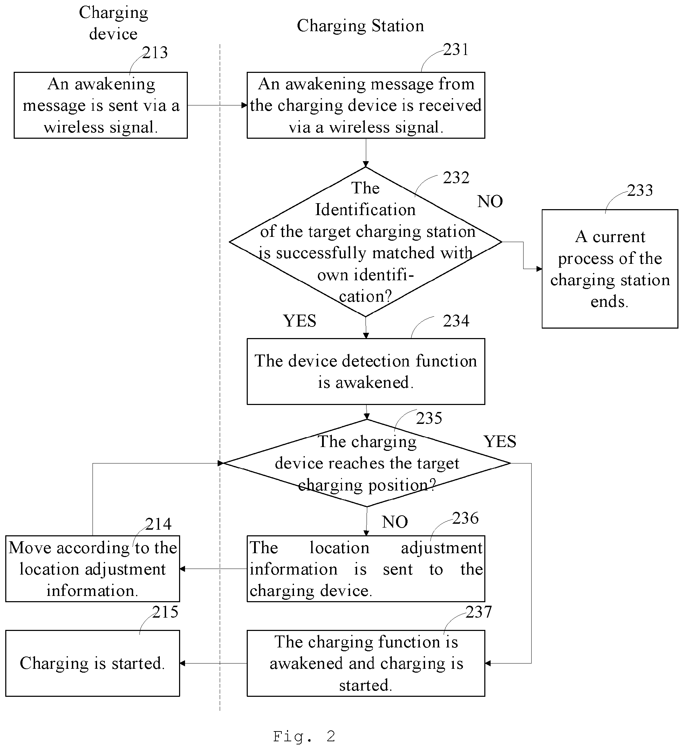

A flowchart of other embodiments of the charging method according to the present disclosure is shown in Fig. 2, wherein steps 213 to 215 on the left of the dotted line are operations performed by the charging device, and steps 231-237 on the right are operations performed by the charging station.

In Step 213, the charging device sends an awakening message via a wireless signal, and the awakening message carries the identification of the target charging station. In some embodiments, the awakening message may be sent by broadcast. In some embodiments, the wireless signal refers to a signal based on LoRa communication. This operation triggers the charging station that receives an awakening message to perform Step 231.

In some embodiments, if the charging station is currently occupied, the awakening message is directly ignored, and if the charging station is currently idle, Step 231 is performed.

In Step 231, the charging station receives an awakening message from the charging device via a wireless signal. In some embodiments, the wireless signal refers to a signal based on LoRa communication.

In Step 232, the charging station matches the identification of the target charging station in the awakening message with the identification of the charging station itself. If successfully matched, Step 234 is performed. If not successfully matched, Step 233 is performed.

In Step 233, the charging station determines that the charging station itself is not the target charging station, so that the awakening message is ignored and a current state of the charging station remains unchanged.

In Step 234, the charging station determines that the charging station itself is the target charging station, so that a related function of the device is awakened and gets ready for charging the charging device. In some embodiments, the awakening function may include a charging function and a device detection function. In some embodiments, the device detection function may be awakened first to perform Step 235.

In Step 235, the charging station uses the device detection function to determine that the charging device reaches the target charging location. In some embodiments, the device detection function may be performed by an ultrasonic sensor to determine whether the charging device reaches the target charging location by transmitting an ultrasonic signal to the target charging location and receiving feedback. If the target charging location is reached, Step 237 is performed. If it is determined that the charging device has not reached the target charging location, for example, the ultrasonic sensor detects that there is no object at the target charging location, Step 236 is performed.

In Step 236, the charging station sends the location adjustment information to the charging device, so as to trigger the charging device to perform Step 214. In some embodiments, the location adjustment information may include accurate location information of the target charging location.

In Step 214, the charging device moves according to the location adjustment information.

The device detection function of the charging station may continuously detect the location of the charging device, and when it is found that the charging device is ready, Step 237 is performed.

In Step 237, the charging station starts charging the charging device. In some embodiments, if the charging function of the charging station is still in a sleep state, the charging function is awakened, and charging is started, so as to further reduce the energy waste. This operation triggers the charging device to perform Step 215.

In Step 215, the charging device receives electric energy output from the charging station, and charging is started.

Based on the method in the above-described embodiments, the charging device may directly interact with the charging station based on LoRa communication technology without obtaining a communication address of the charging station, and each charging station may identify an awakening message for the charging station itself according to the identification carried in the awakening message and then get ready for charging, which avoids the dependance for the charging station on concentrated control, and avoids being affected by a concentrated control device and the related transmission quality of Internet, and improves the reliability of the charging system. In addition, the location of the charging device may be adjusted in time through the device detection function, so as to improve the reliability of an automatic charging process from the charging device to the charging station.

In some embodiments, during the charging operation of the charging station, the charging device and the charging station may perform charging monitoring respectively, determine whether the charging state is normal, and send the information to the other party at a respective predetermined frequency, and stop charging in time when it is found that either party is abnormal. In some embodiments, during the charging process, the charging device monitors a charging state and sends the first state monitoring information to the target charging station via a wireless signal according to a first predetermined frequency, and the charging station receives the first state monitoring information from the charging device via a wireless signal. In some embodiments, the charging station monitors a charging state, and sends the second state monitoring information to the charging device via a wireless signal according to a second predetermined frequency, and the charging device receives the second state monitoring information from the target charging station via a wireless signal. In some embodiments, the wireless signal is a signal based on LoRa communication.

With the swift expansion of the battery capacity and the rapid increase of the charging current at present, a great challenge is put forward to firefighting devices and other safety facilities. By way of the method in the above-described embodiments, it is possible to guarantee smooth continuous interaction and ensure a normal state of both parties, and it is also possible to obtain an abnormal state of the other party in time, and improve the charging reliability.

In some embodiments, when the charging station finds that the charging station itself is in an abnormal state, in addition to stopping charging the charging device, the abnormal charging state information is also sent to the LoRa base station. When the charging device finds that the charging station itself is in an abnormal state, in addition to stopping charging in time and informing the charging station to stop discharging, the abnormal charging state information is also sent to the LoRa base station.

Based on the method in the above-described embodiments, the charging station and the charging device report own abnormal charging conditions to the LoRa base station respectively, and avoid repeated reporting of abnormalities, thereby reducing the information processing burden of the LoRa base station.

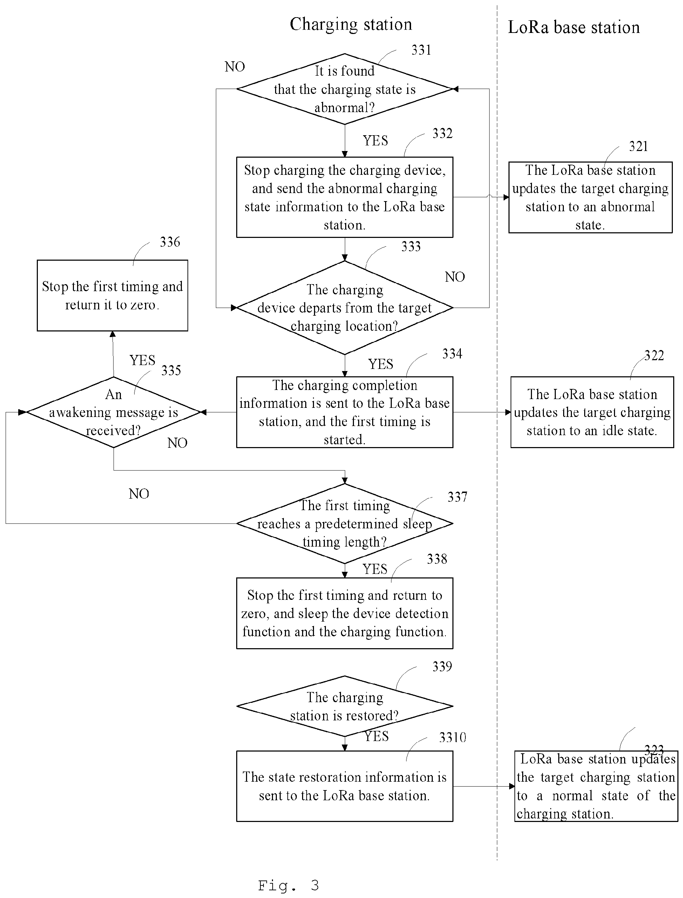

In some embodiments, during the process of performing the charging operation by the charging station, the flowchart of the charging method according to the present disclosure is shown in Fig. 3, wherein steps 331 to 3310 on the left side of the dotted line are the operations performed by the charging station, and steps 321 to 323 on the right side are the operations performed by the LoRa base station.

In Step 331, the charging station continuously monitors a charging state and determines whether the charging state is abnormal. If it is determined that the charging state is abnormal, Step 332 is performed. If the charging state is normal, Step 333 is performed.

In Step 332, the charging station stops charging the charging device, and sends the abnormal charging state information to the LoRa base station, so as to trigger the LoRa base station to perform Step 321.

In addition, the charging station will further perform Step 333.

In Step 321, the LoRa base station updates the target charging location to an abnormal state. The charging location in the abnormal state is a location unavailable, so that the location in the abnormal state will not be considered when the LoRa base station allocates the charging location for the charging device subsequently.

In Step 333, the charging station determines whether the charging device departs from the target charging location. If the charging device has departed from the target charging location, proceed to Step 334. If not, return to perform Step 331 and continue to monitor the charging state.

In some embodiments, the charging station determines whether the charging device reaches a predetermined battery charge level, which may be full or reach a predetermined charging ratio, for example, 90%. If it is determined that the charging device has reached a predetermined battery charge level, the output of electric energy is stopped, the charging is ended, and the charging device is informed to depart from the target location. Then, whether the charging device has departed is detected by using the device detection function.

In some embodiments, the charging station may also use the device detection function to monitor whether the charging device has departed in real time, so as to perceive in time a condition that the charging device departs in advance before reaching the predetermined battery charge level.

In Step 334, the charging station sends the charging completion information to the LoRa base station, and starts the first timing, and performs Step 335. In some embodiments, the charging station triggers the LoRa base station to perform Step 322.

In Step 322, the LoRa base station updates the target charging location to an idle state, so that this charging location may be reallocated, thereby improving the success rate of allocating a charging location subsequently.

In Step 335, during the process of performing the first timing, it is determined whether an awakening message is received. In some embodiments, after the awakening message is received, the charging station first determines whether the identification in the awakening message is matched with the charging station itself. If successfully matched, Step 336 is performed. If not successfully matched, Step 337 is performed.

In Step 336, the charging station stops the first timing and returns the first timing to zero, and gets ready for charging the charging device.

In Step 337, it is determined whether the first timing reaches a predetermined amount of sleep time. If the predetermined amount of sleep time is reached, Step 338 is performed. If not, Step 335 is performed.

In Step 338, the charging station stops the first timing and returns the first timing to zero, and sleeps the device detection function and the charging function.

Based on the method in the above-described embodiments, the charging station may synchronize the abnormality with the LoRa base station in time, thereby improving the reliability of allocating a charging station for a charging device subsequently. In addition, the charging station is able to switch to a sleep state in time, so as to reduce the energy consumption and the equipment loss.

In some embodiments, the charging station also starts a second timing if it is determined by the device detection function that the charging device reaches the target charging location. In the case where it is determined by the device detection function that the charging device departs from the target charging location, the second timing is stopped. The occupation time of the charging device in the target charging location is determined according to the duration of the above-described second timing. This occupation time may serve as the data basis for subsequent maintenance of the charging station, statistics of the energy consumption of the charging station, and assessment and evaluation of the charging device.

In some embodiments, the charging method of the present disclosure may further include an operation starting with Step 339 as shown in Fig. 3.

In Step 339, the charging station determines whether the charging station itself is in a restored state. In some embodiments, it is triggered to perform Step 3310 after manual repair and passing the test.

In Step 3310, the charging station sends the state restoration information to the LoRa base station, so as to trigger the LoRa base station to perform Step 323.

In Step 323, the LoRa base station updates the target charging location to a normal state of the charging station, so that the charging location could be reallocated.

By way of this method, it is possible to improve the success rate of allocating a charging location subsequently and ensure a continuous cyclic operation of the system, thereby improving the utilization rate of the charging location.

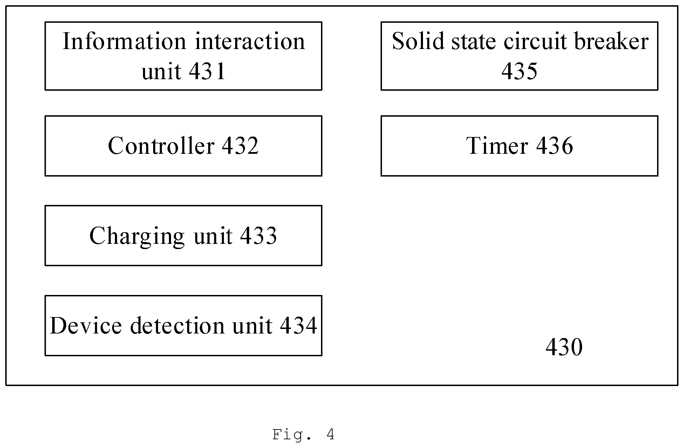

A schematic view of some embodiments of the charging station 43 according to the present disclosure is shown in Fig. 4.

The information interaction unit 431 may receive an awakening message from the charging device via a wireless signal, wherein the awakening message includes the identification of the target charging station. The information interaction unit 431 sends the awakening message to the controller 432. In some embodiments, the identification of the target charging station and the target charging location are obtained by the charging device from the LoRa base station based on LoRa communication, and the obtaining process may be shown in a corresponding embodiment of Fig. 1.

The controller 432 stores the identification of the charging station itself in advance, and the controller could match the identification of the target charging station in the awakening message with its own identification, the charging unit is awakened if successfully matched.

The charging unit 433 could charge the charging device after it is awakened. In some embodiments, the charging unit 433 may start discharging after it is detected that the charging port is successfully connected with the charging device.

Such charging station may directly interact with the charging device based on wireless communication technology, and each charging station may identify an awakening message for the charging station itself according to the identification carried in the awakening message, and then get ready for charging, which avoids the dependance for the charging station on concentrated control, and avoids being affected by a concentrated control device and the related transmission quality of Internet, and improves the reliability of the charging system..

In some embodiments, the controller 432 may also be in a sleep state when it is in an idle state. When the information interaction unit 431 receives an awakening message, the controller 432 is awakened, thereby shortening the operation time of the controller 432 and further reducing the energy consumption.

In some embodiments, as shown in Fig. 4, the charging station 43 may further include a device detection unit 434, which is able to detect whether the charging device reaches the target charging location and feed the detection result back to the controller after receiving an awakening instruction from the controller. In some embodiments, the device detection unit 434 may determine whether the charging device reaches the target charging location based on an ultrasonic detection method.

The controller 432 may send an awakening instruction to the device detection unit in the case where the identification of the target charging station is successfully matched with own identification of the charging station. The controller 432 monitors the information fed back by the device detection unit. If the device detection unit feeds back that the charging device reaches the target charging location, the charging unit is further awakened. If the device detection unit feeds back that the charging device has not reached the target charging location, the controller 432 sends the location adjustment information through the information interaction unit.

Such charging station is able to adjust the location of the charging device in time through the device detection function, which improves the reliability of an automatic charging process from a charging device to a charging station.

In some embodiments, the charging station 43 further include a solid state circuit breaker 435, which may turn on the device detection unit in the case where an awakening instruction from the controller is relieved, and turn off the device detection unit in the case where a sleep instruction from the controller is received. Such charging station may reduce the requirements for the control capability of the device detection unit, and operate the working state of the device detection unit by the solid-state switch which is conveniently controlled, which facilities the implementation.

In some embodiments, the charging station 43 may further include a timer 436, which may start the first timing according to a first timing instruction of the controller; and stop timing and return the first timing to zero according to a timing stop instruction of the controller; and in the case where the timing reaches a predetermined sleep timing length, the timer 436 sends the timing end information to the controller, and stops timing and returns the first timing to zero. In view of the above-described functions of the timer 436, the controller 432 is able to send a first timing instruction to the timer in the case where it is determined that the charging of the charging device is completed. In the case where the information interaction unit receives the awakening message, a timing stop instruction is sent to the timing. In the case where the timing end information is received, a sleep instruction is sent.

Such charging station may switch to a sleep state in time after charging ends, which reduces the energy consumption. In addition, it is possible to avoid frequent and repeated switching between sleep and awakening by a timing operation, which improves the operational continuity.

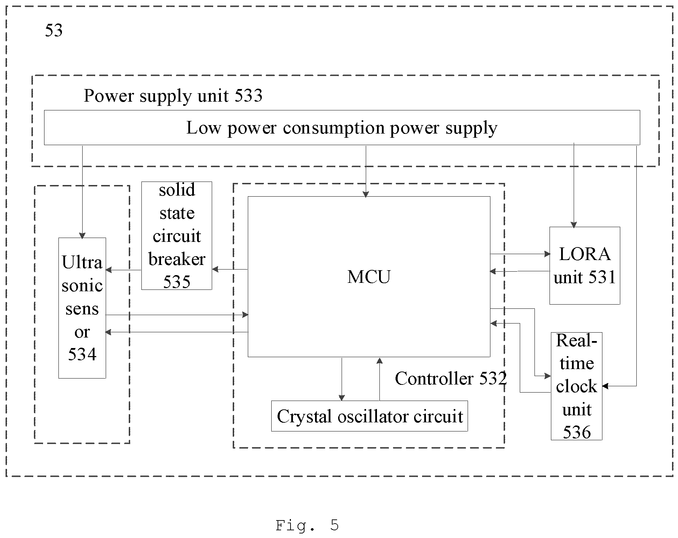

A schematic view of other embodiments of the charging station 53 according to the present disclosure is shown in Fig. 5.

The LoRa unit 531 performs the functions of the above-described information interaction unit 431, and interacts with the LoRa base station and the charging device. In some embodiments, the LoRa unit 531 and the controller 532 may interact through a BUS. The LoRa unit 531 is signally connected with the controller 532.

The controller 532 may include a MCU and a crystal oscillator circuit, which are signally connected with the ultrasonic sensor, the solid state circuit breaker, the LoRa unit and the real-time clock unit respectively. The controller 532 may send a start signal to the ultrasonic sensor 534, and calculate a distance between the charging device and the charging station according to the ultrasonic return time. The controller 532 is also able to collect the real-time clock information, and determine whether the controller, the ultrasonic sensor and the LoRa unit need to enter a low power consumption mode according to the real-time clock. In addition, the controller 532 is also able to control the LoRa unit to send the information to the charging device.

The power supply unit 533 performs the functions of the above-mentioned charging power supply 533, and furthermore, may also supply power to various parts of the charging station. In some embodiments, the power supply unit 533 includes a low power consumption power supply for supplying power to various parts of the charging station and switching to a low power consumption mode when the unit supplied with power sleeps.

The ultrasonic sensor 534 is an element of the above-described device detection unit 434. In some embodiments, the controller may send a high-level signal of not less than 10us to a control end of the ultrasonic sensor 534 through the I/O (Input/Output) port. After a signal is received, the ultrasonic sensor 534 automatically sends out eight square waves of 40KHz, and detects whether a return signal is received. When the receiving port has a rising edge, it is determined that the charging device is located in the charging location. When there is a falling edge, it is determined that the charging device departs from the charging location. In some embodiments, when the receiving port of the ultrasonic sensor 534 determines that there is a rising edge, the timer starts timing, and when the receiving port of the ultrasonic sensor 534 determines that there is a falling edge, the timing stops. The timing duration is the time that the charging device stays at the charging location, and the timing duration data is sent to the controller and stored for use. In some embodiments, the data may also be reported to the LoRa base station.

The solid state circuit breaker 535 serves as a sleep and working control switch of the ultrasonic sensor 534.

The real-time clock unit 536 performs the functions of the above-mentioned timing unit, which includes exchanging information with the controller 532; and real-time timing, wherein the timing result is used by the controller 531 to determine whether the controller itself, the ultrasonic sensor and the LoRa unit need to enter a low power consumption mode. In some embodiments, the real-time clock unit 536 may interact with the controller through an IIC (Inter-Integrated Circuit) interface.

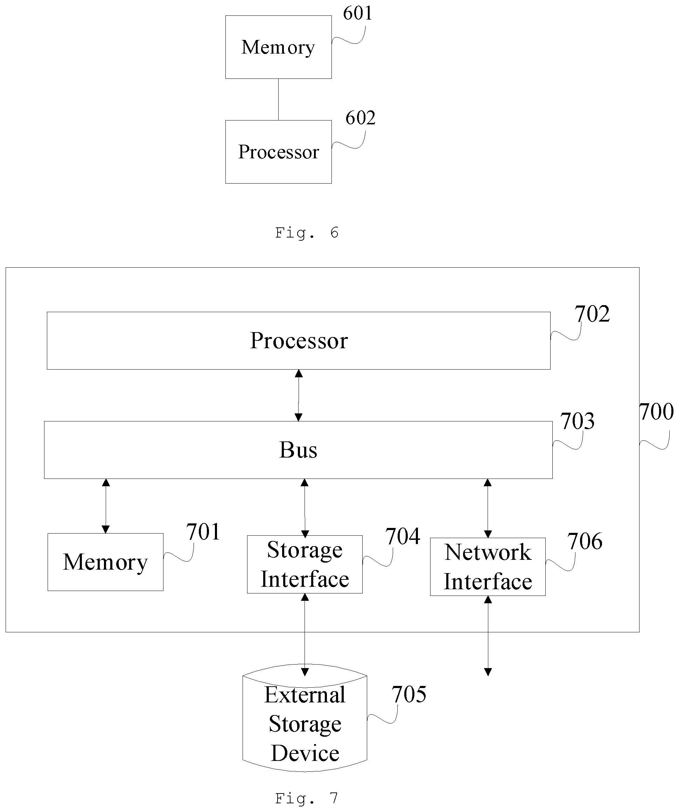

A schematic structural view of one embodiment of the charging system according to the present disclosure is shown in Fig. 6. The charging system which may be any of a charging device, a charging station and a LoRa base station, includes a memory 601 and a processor 602. Wherein, the memory 601 may be a magnetic disk, a flash memory, or any other non-volatile storage medium. The memory is configured to store instructions in a corresponding embodiment of the charging method above. The processor 602 which is coupled to the memory 601, may be implemented as one or more integrated circuits, such as a microprocessor or a microcontroller. The processor 602 which is configured to execute instructions stored in the memory, may improve the reliability of automatic charging docking.

In one embodiment, it may also be that, as shown in Fig. 7, the charging system 700 comprises a memory 701 and a processor 702. The processor 702 is coupled to the memory 701 via a bus 703. The charging system 700 may also be connected to the external storage device 705 through a storage interface 704 for calling external data, and may also be connected to network or another computer system (not shown) through the network interface 706. Detailed introduction will not be repeated here.

In this embodiment, it is possible to improve the reliability of automatic charging docking by storing data instructions by the memory and processing the above-described instructions by the processor.

In another embodiment, a computer readable storage medium has computer program instructions stored thereon that, when executed by a processor, realize the steps of the method in a corresponding embodiment of the charging method. Those skilled in the art will appreciate that the embodiments of the present disclosure may be provided as a method, device, or computer program product. Accordingly, the present disclosure may take the form of an entirely hardware embodiment, an entirely software embodiment, or a combination of software and hardware aspects. Moreover, the present disclosure may take the form of a computer program product embodied in one or more computer-usable non-transitory storage media (including but not limited to a disk memory, CD-ROM, an optical memory, and the like) containing computer usable program codes therein.

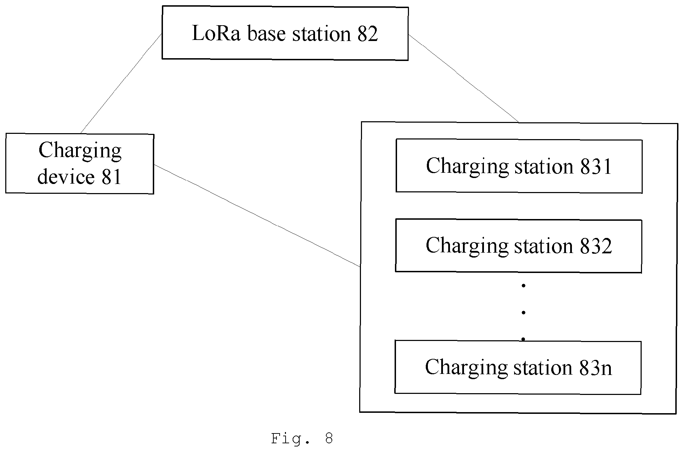

A schematic view of still other embodiments of the charging system according to the present disclosure is shown in Fig. 8, which includes a LoRa base station 82 and a charging station 831 to 83n, where n is a positive integer greater than 1.

The LoRa base station 82 may perform any method performed by the LoRa base station as mentioned above. Each of the charging stations 831 to 83n may be any mentioned above, which may perform any method performed by the charging station as mentioned above.

In some embodiments, as shown in Fig. 8, the charging system may further include a charging device 81, which may perform any method performed by the charging station above.

Based on a method in the above embodiments, the LoRa base station allocates a charging location for the charging device according to a condition of the charging location stored in advance, and informs the charging device by a LoRa communication method, so that the charging device may automatically head for the charging location. The communication process is only present between the LoRa base station and the charging device without data transmission depending on Internet or WiFi signal coverage, thereby reducing the probability of packet loss and bit error, and improving the reliability of charging location allocation. The charging device directly interacts with the charging station via a wireless signal without transfer of a third party, which further improves the reliability and efficiency of communication. The charging station starts to work when awakened by the charging device, and not need to maintain a working state all the time, thereby reducing the energy consumption of the charging station.

The present disclosure is described with reference to the flowcharts and/or block views of the methods, devices (systems), and computer program products according to the embodiments of the present disclosure. It will be understood that each step and/or block of the flowcharts and/or block views as well as a combination of steps and/or blocks of the flowcharts and/or block views may be implemented by a computer program instruction. These computer program instructions may be provided to a processor of a general purpose computer, special purpose computer, an embedded processing machine, or other programmable data processing devices to produce a machine, such that the instructions executed by a processor of a computer or other programmable data processing devices produce a device for realizing a function designated in one or more steps of a flowchart and/or one or more blocks in a block view.

These computer program instructions may also be stored in a computer readable memory that may guide a computer or other programmable data processing device to operate in a particular manner, such that the instructions stored in the computer readable memory produce a manufacture including an instruction device. The instruction device realizes a function designated in one or more steps in a flowchart or one or more blocks in a block view.

These computer program instructions may also be loaded onto a computer or other programmable data processing devices, such that a series of operational steps are performed on a computer or other programmable device to produce a computer-implemented processing, such that the instructions executed on a computer or other programmable devices provide steps for realizing a function designated in one or more steps of the flowchart and/or one or more blocks in the block view.

Hitherto, the present disclosure has been described in detail. Some details well known in the art are not described in order to avoid obscuring the concept of the present disclosure. According to the above description, those skilled in the art would fully understand how to implement the technical solutions disclosed here.

The method and device of the present disclosure may be implemented in many manners. For example, the method and device of the present disclosure may be implemented by software, hardware, firmware, or any combination of software, hardware, and firmware. The above-described sequence for the steps of the method is merely for illustrative purposes, and the steps of the method of the present disclosure are not limited to the sequence specifically described above unless otherwise specified. Moreover, in some embodiments, the present disclosure may also be embodied as programs recorded in a recording medium, which include machine readable instructions for implementing the method according to the present disclosure. Thus, the present disclosure also covers a recording medium that stores programs for performing the method according to the present disclosure.

Finally, it should be noted that: the above embodiments are only intended to explain the technical solution of the present disclosure rather than limiting the same; although detailed explanations are made to the present disclosure with reference to preferred embodiments, those of ordinary skill in the art should understand that: it is still possible to make amendments to the embodiments of the present disclosure or equivalent replacements to some of the technical features, which shall all be encompassed in the scope of the technical solution for which protection is sought in the present disclosure without departing from the spirit of the technical solution of the present disclosure.

## Claims

1. A charging method, comprising:
sending a charging request, by a charging device, to a Long Range Radio (LoRa) base station based on LoRa communication, wherein the charging request comprises a location information of the charging device;
receiving a target charging location and an identification of a charging station fed back by the LoRa base station, wherein the target charging location is selected by the LoRa base station according to the location information;
heading for the target charging location and sending an awakening message via a wireless signal by the charging device, wherein the awakening message comprises the identification; and
starting charging in a case where a target charging station corresponding to the target charging location successfully matches the identification.

2. The charging method according to claim 1, further comprising:
in a case where the charging device receives a location adjustment information from the target charging station via the wireless signal after the awakening message is sent, moving according to the location adjustment information until charging is started.

3. The charging method according to claim 1 or 2, wherein the wireless signal is a signal based on LoRa communication.

4. The charging method according to claim 1 or 2, wherein the starting charging comprises:
moving, by the charging device, according to the target charging location, until a first charging port of the charging device is attached to a second charging port of the target charging station; and
obtaining electric energy, by the charging device, through the first charging port, wherein the charging device uses an attached charging method.

5. The charging method according to claim 1 or 2, further comprising at least one of:
during a charging process, monitoring a charging state, and sending a first state monitoring information to the target charging station via the wireless signal in a first predetermined frequency by the charging device; or
receiving a second state monitoring information from the target charging station by the charging device, via a wireless signal.

6. The charging method according to claim 5, further comprising,
stopping charging when it is found that the charging state is abnormal, and then sending an abnormal charging state information to at least one of a base station or a charging station by the charging device.

7. A charging method, comprising:
receiving an awakening message from a charging device via a wireless signal by a charging station, wherein the awakening message comprises an identification of a target charging station; and
matching the identification of the target charging station with an own identification of the charging station, and awakening a charging function to charge the charging device in a case of successfully matching,
wherein a target charging location and the identification of the target charging station are obtained by the charging device from a LoRa base station which is based on LoRa communication.

8. The charging method according to claim 7, further comprising:
awakening a device detection function in a case where the identification of the target charging station is successfully matched with the own identification of the charging station;
performing charging the charging device after it is determined by the device detection function that the charging device reaches the target charging location; and
sending a location adjustment information to the charging device when it is determined by the device detection function that the charging device has not reached the target charging location.

9. The charging method according to claim 7 or 8, wherein the wireless signal is a signal based on LoRa communication.

10. The charging method according to claim 7 or 8, wherein the charging the charging device comprises:
charging a first charging port through a second charging port in a case where the second charging port of the charging station is attached to the first charging port of the charging device, wherein the charging device uses an attached charging method.

11. The charging method according to claim 7 or 8, further comprising at least one of:
receiving a first state monitoring information from the charging device by the charging station via the wireless signal; or
during a charging process, monitoring a charging state and sending a second state monitoring information to the charging device by the charging station via the wireless signal, according to a second predetermined frequency.

12. The charging method according to claim 11, further comprising at least one of:
stopping charging the charging device and sending an abnormal charging state information to the LoRa base station by the charging station, in a case where the charging state is found abnormal, wherein the LoRa base station updates the stored information of charging stations according to the abnormal charging state information, to allocate the target charging station to the charging device according to the information of the charging stations; or
sending a charging completion information to the LoRa base station by the charging station, in a case where the charging device departs from the target charging location, to update the target charging location to an idle state by the LoRa base station.

13. The charging method according to claim 8, further comprising:
starting a first timing in a case where the charging of the charging device is determined completed;
stopping the first timing and returning the first timing to zero in response to the awakening message is received; and
sleeping the device detection function and the charging function in response to the first timing reaches a predetermined amount of sleep time.

14. The charging method according to claim 8, further comprising:
starting a second timing in a case where it is determined by the device detection function that the charging device reaches the target charging location;
stopping the second timing in a case where it is determined by the device detection function that the charging device departs from the target charging location; and
determining an occupation time of the charging device at the target charging location according to a duration of the second timing.

15. A charging method, comprising:
receiving a charging request based on LoRa communication from a charging device by a LoRa base station, wherein the charging request comprises a location information of the charging device;
selecting a target charging location according to the location information of the charging device, and determining an identification of a corresponding charging station; and
sending the target charging location and the identification to the charging device for the charging device to head for the target charging location, and activating a target charging station to charge according to the identification.

16. The charging method according to claim 15, wherein the sending the target charging location and the identification to the charging device comprises:
determining a charging location closest to the charging device as the target charging location among the charging locations where is in an idle state and the corresponding charging station is normal, according to associated information of charging locations and the location information of the charging device,
wherein the associated information of the charging locations comprises whether in the idle state, whether the corresponding charging station is normal, a location and the identification of the corresponding charging station.

17. The charging method according to claim 16, further comprising at least one of:
updating the target charging location to a non-idle state by the LoRa base station, after the target charging location is determined;
updating the target charging location to the idle state by the LoRa base station, after the charging completion information from the charging station is received;
updating the target charging location to a charging station abnormal state by the LoRa base station, in a case where an abnormal charging state information from at least one of the charging station or the charging device is received; or
updating the target charging location to a charging station normal state by the LoRa base station, in a case where a state restoration information from the charging station is received.

18. A charging station, comprising:
an information interaction unit configured to receive an awakening message from a charging device via a wireless signal, wherein the awakening message comprises an identification of a target charging station; and
a controller configured to match an identification of the target charging station with an own identification of the charging station, and awaken a charging unit in a case of successfully matching;
a charging unit configured to charge the charging device,
wherein a target charging location and the identification of the target charging station are obtained by the charging device from a LoRa base station which is based on LoRa communication.

19. The charging station according to claim 18, wherein,
the information interaction unit is a LoRa communication module, and the wireless signal is a signal based on LoRa communication.

20. The charging station according to claim 18, further comprising:
a device detection unit, configured to detect whether the charging device reaches a target charging location after an awakening instruction from the controller is received, and feed back to the controller;
the controller is further configured to send the awakening instruction to the device detection unit in a case where the identification of the target charging station is successfully matched with the own identification of the charging station; if the device detection unit feeds back that the charging device reaches a target charging location, the operation of awakening the charging unit is performed; and if not, a location adjustment information is sent through the information interaction unit.

21. The charging station according to claim 20, wherein the device detection unit comprises an ultrasonic sensor.

22. The charging station according to claim 20, further comprising, a solid state circuit breaker configured to turn on the device detection unit in a case where the awakening instruction from the controller is received; and turn off the device detection unit in a case where a sleep instruction from the controller is received.

23. The charging station according to claim 18, further comprising,
a timer configured to start a first timing according to a first timing instruction of the controller; stop timing and return the first timing to zero according to a timing stop instruction of the controller; and send the timing stop information to the controller to stop timing and return to zero in a case where the timing reaches a predetermined amount of sleep time;
the controller is further configured to send the first timing instruction to the timer in a case where the charging of the charging device is determined completed; send the timing stop instruction to the timer in a case where the information interaction unit receives the awakening message; and send the sleep instruction in a case where the timing stop information is received.

24. A charging system, comprising:
a memory; and
a processor coupled to the memory, wherein the processor is configured to perform the method according to any of claims 1 to 17 based on instructions stored in the memory.

25. A non-transitory computer-readable storage medium having computer program instructions stored thereon that, when executed by a processor, implement the steps of the method according to any of claims 1 to 17.

26. A charging system, comprising:
a charging station configured to perform the method according to any of claims 7 to 14; and
a LoRa base station configured to perform the method according to any of claims 15 to 17.

27. The charging system according to claim 26, further comprising:
a charging device configured to perform the method according to any of claims 1 to 6.
